(19) Europäisches Patentamt
European Patent Office
Office européen des brevets

(11) **EP 3 862 933 A1**

(12) **EUROPEAN PATENT APPLICATION**

(43) Date of publication:
**11.08.2021 Bulletin 2021/32**

(51) Int Cl.:
***G06N 7/00*** (2006.01)

(21) Application number: **20382090.7**

(22) Date of filing: **10.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Banco Bilbao Vizcaya Argentaria, S.A.
48005 Bilbao (ES)**

(72) Inventors:
• **SOLDEVILLA MARTÍNEZ, Pablo
28050 Madrid (ES)**
• **SÁNCHEZ MARTÍNEZ, Escolástico
28050 Madrid (ES)**
• **SÁNCHEZ MORENO, Miguel Ángel
28050 Madrid (ES)**

(74) Representative: **ABG Intellectual Property Law, S.L.
Avenida de Burgos, 16D
Edificio Euromor
28036 Madrid (ES)**

(54) **METHOD AND SYSTEM FOR MONITORING ALERTS**

(57) The present invention belongs to the field of monitoring alerts to be classified according to their severity. In particular, the invention describes a method and a system that monitor a large amount of alerts automatically to prioritize those with severe character. Such alerts are generated by measuring instruments or devices - as sensors or detectors - or are generated by third party tools.

Fig. 1

**Description**

TECHNICAL FIELD OF THE INVENTION

The present invention belongs to the field of monitoring alerts to be classified according to their severity. In particular, the invention describes a method and a system that monitor a large amount of alerts automatically to prioritize those with severe character. Such alerts are generated by measuring instruments or devices - as sensors or detectors - or are generated by third party tools.

BACKGROUND OF THE INVENTION

The emission of alerts could be performed in many contexts nowadays. The aim of such emission is to report an abnormal behavior of a system, e.g. an overheating of a machine in an industrial plant, or to inform about a certain event is taken place, e.g. a stock market crash or a market abuse.

The severity or urgency of each alert is really variable, being mandatory to analyze the alerts one by one to establish a prioritization of the most severe alerts. In this way, alerts reporting serious problems could require the intervention of professionals, for example for repairing a broken machine, or a certain type of actuation, for example the automatic triggering of a fire hydrant, whereas alerts that do not report important issues can even be discarded.

An alert management method starts after the generation of a huge number of alerts which need to be monitored. The objective of such monitoring is to identify the severe cases that should be prioritized. In this way, it is essential to analyze alerts quickly so that such prioritization is properly performed. The negative effects of failing in the prioritization of alerts are diverse, from stopping a production process of an industrial plant to receiving substantial fines. For example, the interruption of the production process could be the consequence of not repairing a certain machine when a malfunctioning alert is issued or the substantial fines could be the consequence of not attending legal, compliance and control surveillance alerts (such as trade surveillance or anti-money laundering or fraud surveillance) in order to prevent illegal behavior, such as market abuse, money laundering or terrorism financing.

Traditionally, the alerts are monitored and analyzed manually by a group of experts. Thus, as the volume of alerts received grows, such volume could become unmanageable by said experts leading to a lack of adequate prioritization of the alerts. In this way, a proper alert monitoring procedure would require a great consumption of time and extra resources that, many times, are completely unaffordable.

Some solutions that simulate the decisions that the group of experts would make when analyzing the alerts are based on machine learning techniques. The main problem of these solutions is that there are not enough hits (positive alerts) to train the algorithms and they offer theoretical solutions which have not been tested against practical examples. Besides, these solutions are focused on analyzing background alerts, but they disregard other aspects that must be taken into account during the classification of the alerts; for example, the accuracy and the reliability of the element that issued the alert.

The following invention proposes a solution to the problems described above by means of an efficient and robust method for monitoring high volumes of alerts so that the severe alerts identified are properly prioritized.

SUMMARY OF THE INVENTION

The present invention provides an alternative solution for the aforementioned problems, by a computer implemented-method for monitoring large amounts of alerts according to claim 1, a processing system according to claim 13, a computer program product according to claim 14 and a computer-readable medium according to claim 15. In dependent claims, preferred embodiments of the invention are defined.

In a first inventive aspect, the invention provides *a computer implemented-method for monitoring large amounts of alerts to classify them according to their severity, the method comprising the following steps:*

*a) providing a database of background cases;*
*b) receiving a plurality of alerts issued by at least one element;*
*c) classifying the plurality of alerts in at least one alert case according to a predetermined classifying criterion;*
*d) calculating the odds each alert case corresponds to a hit using background cases;*
*e) classifying the at least one alert case in a category of severity, wherein the number of categories of severity is at least two, according to the odds previously calculated;*
*f) storing each alert with the result of the classification and other relevant information as part of the background cases to be used in subsequent executions of the method;*
*g) providing a set of alert cases classified in at least one category of severity.*

Throughout all this document, *"large amount of alerts"* will be understood as a number of alerts that is unmanageable by a group of experts when they analyze the alerts manually. This amount of alerts would lead to an improper prioritization thereof. Throughout all this document, *"element"* will be understood as the sensor, detector, device, third party or third party tool that issues an alert. As *"third party"* will be understood as a third person, organization or company not directly involved in the method for monitoring alerts. The term *"severity"* will be understood as the degree or the level of urgency of an alert. Hence, when an alert has the highest possible degree of severity, it should be handled with priority in relation to the rest of alerts. On contrary, a disposable alert has the lowest possible degree of severity. The method classifies the alerts according to their severity in a category of prioritization, being the number of categories at least two.

The consequences of not attending a severe or priority alert would depend on the context of the alert issuing, for example:

- in the context of an industrial factory, a severe alert could be an alert that, if it is not taken into account, would lead to stop the productive process of the industrial plant;
- in the context of traffic alerts, a severe alert could be an alert that would involve serious health problems or even the dead of passengers when it is not promptly handled;
- in the context of legal, compliance and control surveillance, a severe alert could be an alert that would imply receiving substantial fines when there is obligation of controlling crime, misdemeanor or illegal behavior - such as market abuse, money laundering or terrorism financing - and such alerts are not properly attended.

The method of the invention for monitoring alerts to be classified begins with the reception of a plurality of alerts, preferably a large amount of alerts. In a preferred manner, those alerts are received by a computer - or a microcontroller - with processing capabilities and memory means. In general, each alert has just partial information about the event being reported so a set of alerts is needed to count on the whole information of such event. As *"event being reported'* should be understood the event that has caused the issuing of alerts; for example, the detection of a machine failure in an industrial plant; the detection of a fire in a forest or the detection of an illegal behavior.

Hence, the method continues classifying the alerts in at least one alert case according to a classifying criterion previously predetermined. An *"alert case"* should be understood as a group of alerts that have at least one feature in common or a group of alerts that share the same aim so that the information obtained from the alert case allows having complete information about the event being reported.

In a preferred embodiment, the number of alert cases is greater than one so, for simplicity, throughout the document we will refer to this term in plural without prejudice that just one alert case could be generated.

As it was previously mentioned, the alert cases are generated according to a predetermined classifying criterion. Such criterion varies with the context of alert issuing. For example, in the context of an industrial plant, the classifying criterion could be the selection of alerts coming from the same plant that were issued in a determined period. In another example, the criterion could be the selection of alerts coming from a certain territory. In another example, when alerts are issued in the context of legal, compliance and control surveillance, the criterion could be the selection of alerts of the same account (natural or legal person that ordinates an operation or an investment), and/or with the same asset (where the operation or investment is taken place, for example, the stocks of a public company in an exchange or a fixed income bond) and/or alerts issued during the same trading session.

Once the alerts have been classified in cases, the method continues calculating the odds each alert case corresponds to a hit using background cases.

Throughout all this document, *"odds"* should be understood as a metric for each alert case that is assessed to allow the classification and prioritization of the alert cases. As a preferred embodiment the metric is a probability. Throughout all this document odds or probabilities will be used indistinctly.

Throughout all this document, a *"hit"* should be understood as an event that actually took place or is taking place; that is, the method calculates the probability that a group of alerts is truly reporting an event. For example, if several alerts from the same territory were received reporting the existence of a traffic accident, the method of the invention merges all the alerts in the same case and calculates the odds of a traffic accident is truly occurring or has truly occurred. Throughout all this document, a *"miss"* should be understood as a false positive in reporting an event.

Throughout all this document, *"background cases"* should be understood as groups of alerts that took place in the past and that provide truthful and complete information about the event that was reported. For example, if a fire was actually produced in an industrial plant and several alerts were issued reporting the presence of such fire - by means of, for example, the detection of an increment in the temperature and a decrement of humidity - the alert case resulting from the join of such alerts must be part of the background cases. The alert cases that did not report a real incident (miss) are also part of the background cases.

According to the odds calculated before, the method continues with a classification of the alert cases in a category of severity, being the number of categories at least two. As *"categories of severity"* should be understood the categories where the alert cases are classified to obtain a level of prioritization. For example, in the simplest situation, the alert cases with odds that overcomes a certain predetermined threshold are classified as priority alerts and the rest of the alert cases are classified as non-priority alerts. In this example, the priority alerts are analyzed by a group of experts that decides if the alert case requires the intervention of professionals or a certain type of actuation and the non-priority alerts are automatically discarded.

Finally, the alerts must be joined to the background cases together with the result of the classification and other relevant information. *"Relevant information of an alert"* will be understood as information related to each alert that could be of interest in subsequent executions of the method; for example, the alert case to which the alert belongs, the element that issued the alert or the odds to be a hit calculated for its alert case. These are mere examples without prejudice that other type of relevant information could be kept.

The method of the invention, advantageously, allows managing huge amounts of alerts without requiring additional time or cost resources in relation to the traditional methods. Besides, the accuracy of the method increases with the number of executions; that is, as the alerts classified and analyzed at the end of the method start forming part of the background cases, the information in which the calculation of the odds is based is more complete, being such calculation more accurate execution after execution.

It must be noted that the method is also applicable when the number of alerts could not be considered as large (a number that is manageable by the group of experts). In these cases, the method has also good results in the prioritization of alerts but the advantages in respect to the traditional methods are not so evident.

In a particular embodiment, *the step of the method of calculating the odds each alert case corresponds to a hit comprises the following sub-steps:*

- for each background case, obtaining its $Z_B$ available combinations of behavior properties, $CB_i$, wherein:

    - a behavior property is a kind of alert, a kind of measurement of an alert or a kind of element that issued an alert; and
    - $Z_B$ is calculated as:

$$Z_B = \sum_{M_B=1}^{M_B=N_B} \binom{N_B}{M_B} = \sum_{M_B=1}^{M_B=N_B} \frac{N_B!}{M_B!(N_B-M_B)!}$$

    being $N_B$ the total number of behavior properties of the background case and $M_B$ is the number of behavior properties of each available combination of behavior properties of the background case, with $M_B$ = 1 ... $N_B$;

- applying the Bayes theorem to calculate the odds of each combination $CB_i$ of behavior properties to be a hit:

$$P(H|CB_i) = \frac{P(CB_i|H) * P(H)}{P(CB_i)}$$

wherein P indicates probability, $CB_i$ is each of the combinations of behavior properties of a background case with i = 1 ... $Z_B$, H indicates hit and $P(CB_i|H)$ and $P(H|CB_i)$ are conditional probabilities for each alert case, obtaining its Z available combinations of behavior properties, wherein Z is calculated as:

$$Z = \sum_{M=1}^{M=N} \binom{N}{M} = \sum_{M=1}^{M=N} \frac{N!}{M!(N-M)!}$$

    being N the total number of behavior properties of an alert case and M is the number of behavior properties of each available combination of behavior properties of the alert case, wherein M = 1... N;
- assigning a probability of being a hit to each combination Ci of behavior properties of each alert case according to the odds of being a hit calculated of each the combination $CB_i$ of behavior properties of the background cases:

$$P(H|C_i) = P(H|CB_i)$$

- calculating the probability for each alert case to be a hit as the maximum of the probabilities of being a hit of all its

*available combinations of behavior properties:*

$$P(H_{case}) = max\{P(H|C_1), ..., P(H|C_Z)\}$$

The calculation of the odds each alert case corresponds to a real incident using background cases, in this particular embodiment, comprises several sub-steps.

Firstly, the method estimates all the possible combinations of behavior properties for each background case. Throughout all this document, *"behavior property"* will be understood as a kind of alert, a kind of measurement of an alert or a kind of element that issues an alert so that each background or alert case comprises a certain number of different behavior properties. For example, in the context of alerts of an industrial plant, a behavior property can be a power surge detection, a temperature measurement or a pressure gauge measurement. Another example in the context of alerts for legal, compliance and control surveillance, some behavior properties can be a firm introducing orders unusually large or doing self-trading (firm crossing its own buy and sells orders each other).

Next, the method calculates, for each background case, the odds of each of the previous combinations of behavior properties to be a hit by means of the Bayes theorem. In order to apply such theorem, it is necessary a previous calculation of $P(CB_i|H)$ and $P(H)$ using the information of the background cases.

This way of calculating the odds is really efficient as it takes into account that a hit does not have to involve all the behavior properties of a background case; that is, the method considers that there could be behavior properties that are irrelevant for the event reported that should be deemed as noise.

At this point, a list with the odds for all the possible combinations of behavior properties of each background case to be a hit is available.

Later, for each of the alert cases generated before, the method calculates all the available combinations of behavior properties - having account only the behavior properties contained in the alert case - and assigns them a probability of being a hit. This assignation is performed according to the list of odds of being a hit calculated for the combination of behavior properties of the background cases (inferring that the probabilities of current cases would be similar than the probabilities obtained for the cases analyzed in the past)

Finally, the method estimates the probability for each alert case to be a hit as the maximum of the probabilities of being a hit of all its available combinations of behavior properties.

The method calculates the probabilities an alert case to be a hit based on the background of previously monitored cases. As it was previously mentioned, it requires a background of analyzed cases is available and, advantageously, as larger the background is as more accurate the odds will be.

In a particular embodiment, *the sub-steps for calculating the probabilities of each combination of behavior properties of the background cases to be a hit is performed periodically, being the period a predefined value of time.*

Considering that the background cases grows as the alerts are analyzed and classified, the odds to be a hit of the combination of behavior properties of the background cases could be updated periodically to include the new information with a certain frequency. Advantageously, the accuracy of the method is increased as the number of background cases raises.

In a preferred example, the updating period is once a day. In other examples, the updating period could be once a week, once each 15 days or once a month.

In a particular embodiment, *the classifying criterion is one of the following:*

- *alerts that comes from a specific type of industrial sector; or*
- *alerts issued by a specific industrial factory; or*
- *alerts issued by a specific industrial plant being monitored; or*
- *alerts issued by a specific industrial plant area being monitored; or*
- *alerts issued by the same third party; or*
- *alerts issued in a predefined period of time; or*
- *alerts issued in a predefined territory; or*
- *alerts issued during the course of a specific event; or*
- *alerts issued by a specific account in stock markets; or*
- *alerts issued by a specific asset in stock markets; or*
- *alerts issued during the same trading session in stock markets; or*
- *a combination of at least two of the previous ones.*

As it was previously mentioned, during the execution of the method the alerts are classified in cases. Such cases will depend on a specific classifying criterion.

There are some specific classifying criteria that could be adopted in different alert context:

- alerts that comes from a specific type of industrial sector, being an industrial sector any of the activities that belongs to the industry; for example, alerts issued by the chemical industry, oil industry, food industry, pharma, finance, informatics or aerospace industry.
- alerts issued by the same third party; for example, alerts emitted by a group of users that were present in a traffic accident; alerts issued by a certain company due to an informatics error, alerts issued from an oil platform or alerts issued from the stock exchange.
- alerts issued in a predefined period of time, being such period of time any possible time interval.
- alerts issued in a predefined territory, whatever its extension is.
- alerts issued during the course of a specific event; for example, during a football match, during the course of a meteorological phenomenon as a tornado or a storm or during the course of a demonstration.

Other classifying criteria just apply for a specific alert context, being the classifying criteria really variated:

- in the context of industrial factories, alerts can be classified when they are issued in a specific factory, plant or even in a particular area of a plant.
- in the context of trade surveillance, alerts issued in stock markets can be classified when they are issued by a specific account and/or asset and/or if they are issued during the same trading session.

The classifying criteria previously described are just representative examples without prejudice that other criteria could exists.

In a preferred example, the classifying criterion comprises alerts issued in a predefined period of time and, optionally, at least one of the rest of classifying criteria described above.

In a particular embodiment, *the method further comprises a step of calculating a metric, the Case Relevant Indicator (CRI), for each alert case taking into account the real performance of the elements that issued the alerts; and the step of classifying the at least one alert case in a category of severity is additionally based in the Case Relevant Indicators (CRI).*

Throughout this document, as "*Case Relevant Indicator (CRI)*" will be understood as a further metric for each case being assessed, which is calculated during the execution of the method of the invention, whose purpose is working in a complementary way with the calculation of odds as previously explained to allow the classification and prioritization of the alert cases.

Traditionally, the alerts are monitored and analyzed manually by a group of experts so, when the amount of alerts is unmanageable by this group of experts, requires another techniques for handling the alerts.

In the state of the art, solutions based on Machine Learning techniques can be found. These type of techniques present two main problems:

1) Machine Learning algorithms must be trained so they require to have detected a large number of hits in the background. Many times this will not be available; and
2) Machine Learning techniques analyze data looking for patterns or inference but not having into account other type of relevant information related to the environment of alert issuing.

In this embodiment, the method incorporates this type of information related to the environment of alert issuing. Firstly, the method comprises a step of calculating the *CRI* and this information is later used during the classification and prioritization of the alert cases (together with the information of the calculation of odds, as previously mentioned). Advantageously, the accuracy of the alert cases classification is incremented so that the prioritization of alerts is more precise.

The relevant information is related to the knowledge an expert has about the performance of the element that issued the alert. In the context of the invention, *"real performance"* should be understood as how an element actually operates, which can be different to the ideal performance of the element due to tolerances in their behavior property, manufacturing inaccuracies, malicious operation or changes in regulations, among others.

In the case of sensors, detectors or devices are involved in the alert issuing, the relevant information used is the knowledge an expert has about their type of technology, their calibration and the accuracy of their measurement, if any. In case of third party tools are involved in the alert issuing, the relevant information used is the knowledge an expert has about the reliability of the third party or the reliability of the tool. For example, if the alerts are issued via mobile phone by a group of users, it should be taken into account the reliability of the phones as well as the reliability of the particular user that issued the alert.

In a particular embodiment, *the method further comprises a previous step of calculating a weight for each element configured to issue an alert taking into account the real performance of such element.*

In this embodiment, it is described a step that could be performed previously to the first execution of the method;

that is, an estimation of a weight for each of the available elements issuing alerts could be done once and, afterwards, several executions of the method could be performed. The weight of each element takes values between 0 and 1.

The step of calculating the *CRI* could require such weights. Then, the calculation of these weights aims to take into account the real performance of the elements that issue the alerts.

It is important to stand out that, in case a change in the elements that issue the alerts is produced, the estimation of weights could be repeated. In this way, subsequent execution of the method would use the new values of weights calculated.

In a particular embodiment, *the calculation of the Case Relevant Indicator (CRI) is performed according to the following sub-steps:*

- *selecting a weight for each behavior property of each alert case,*
- *calculating an Initial Case Relevant Indicator (ICRI) for each alert case:*

$$ICRI = [n_1, \dots, n_i, \dots, n_T] \begin{bmatrix} w_1 \\ \vdots \\ w_i \\ \vdots \\ w_T \end{bmatrix} = \sum_{j=1}^{T} n_j \cdot w_j$$

*wherein $n_i$ is the number of alerts generated for the i - th behavior property; $w_i$ is the weight of the i - th behavior property and T the total number of behavior properties of an alert case,*

- *calculating the Case Relevant Indicator (CRI) by applying a Correction Coefficient (CC) to the Initial Case Relevant Indicator (ICRI), wherein the Correction Coefficient (CC) decreases the Case Relevant Indicator (CRI) if the behavior properties of the alert case are similar to behavior properties of other alert case analyzed and discarded in previous executions of the method.*

The Case Relevant Indicator *(CRI),* in this embodiment, is calculated by applying a Correction Coefficient (*CC*) to an Initial estimation of such Case Relevant Indicator *(ICRI),* according to the following formula: *CRI = ICRI * CC*

Firstly, a weight for each behavior property of each alert case is selected. Then, the *ICRI* is calculated according to the number of alerts generated per behavior property and the weights selected for each behavior property.

Most of combination of behavior properties happen with the same pattern over and over again so, in order to prevent the method to prioritize the same kind of alerts every time, the *ICRI* should decrease if other similar patterns have been analyzed and discarded recently. To achieve that, the method of the invention calculates and applies a Corrector Coefficient (*CC*) to the *ICRI* depending on similar behavior properties analyzed recently and its relevance.

In a particular embodiment, *the background cases used for determining the CRI are those happened during a predetermined period of time P.*

In this embodiment, to calculate the CRI a set of background cases that occurred during a predetermined period of time are selected. According to a preferred embodiment, the predetermined period of time rules out the oldest background cases while keeping the alert cases happened recently.

According to a specific embodiment, the background cases used for determining the CRI are selected among those matching a predetermined selection-criterion.

In a particular embodiment, *the Correction Coefficient (CC) is a decreasing function.*

In this embodiment, a decreasing function is used to decrease de Case Relevant Indicator (CRI) in order to give more relevance to the alert cases happened recently over the past alert cases and in order to prevent the method to prioritize similar patterns that have been analyzed and discarded recently.

In a particular embodiment, wherein *the sub-step of the method for calculating the Case Relevant Indicator (CRI) by applying a Correction Coefficient (CC) to the Initial Case Relevant Indicator (ICRI) is performed according to the following sub-steps:*

- *selecting a weight for each behavior property of each background case,*
- *calculating an Amended Case Relevant Indicator (ACRI) vector based on the weights selected for each behavior property of each background case:*

$$M_{ACRI} = \begin{bmatrix} n_{11} & \dots & n_{1T} \\ \vdots & \ddots & \vdots \\ n_{C1} & \dots & n_{CT} \end{bmatrix} \begin{bmatrix} w_1 \\ \vdots \\ w_T \end{bmatrix} = [ACRI_1, \dots, ACRI_C]$$

*wherein $n_{ji}$ is the number of alerts generated for the i - th behavior property for a j - th background case, $w_i$ is the weight of the i - th behavior property, T is the total number of behavior properties and C is the total number of background cases,*

- *calculating the Correction Coefficient ($CC_j$) for each j - th background case based on the Amended Case Relevant Indicator (ACRI) vector:*

    ◦ *if the background case is a hit*

$$CC_j = k$$

    ◦ *otherwise*

$$CC_j = B^{\left(\frac{ACRI_j}{D}\right)};$$

    *wherein B and D are predetermined values that adjust the level of correction of interest and k is a predetermined multiplication coefficient;*

- *calculating, for each alert case, the Case Relevant Indicator (CRI) by applying the Correction Coefficients (CC) to the initial case relevant indicator (ICRI) as follows:*

$$CRI = ICRI * \prod_{j=1}^{C} CC_j$$

    *wherein $CC_j$ is the correction coefficient of the j - th background case and C is the total number of background cases selected.*

Firstly, a weight for each behavior property of each background case is selected. Then, an Amended Case Relevant Indicator *(ACRI)* vector is calculated using such weights and the number of alerts generated for the behavior property of each background case

Hereafter, a Correction Coefficient (*CC*) is calculated for each background case according to the Amended Case Relevant Indicator *(ACRI)* vector. There are two different ways of calculating the Correction Coefficient (*CC*) that depends on if the background case under study is a miss or a hit. In the first case, - the background case is a miss - the Correction Coefficient is calculated using the value of the Amended Case Relevant Indicator *(ACRI)* vector that corresponds to the background case under study and two parameters *B* and *D,* which adjust the level of correction of interest, selected at the beginning of the execution of the method. In the second case, - the background case is a hit - the Correction Coefficient is calculated using a predefined multiplication coefficient *k.*

In a preferred embodiment, the value of the parameter *B* is lower than one and the value of the parameter *k* is greater than one.

The parameters *B, D* and *k* are adjusted statistically by the skilled person to reduce the CRI of the cases whose combinations of behavior properties have repetitive patterns. The values selected for such parameters are related to the range of weight values (*W*) selected, to the background period *P* selected and to the background cases of such period from which the *CC* is calculated. The value of the parameter *k*, additionally, is related to the probability of a case to be a hit and the correlation that exists between the pattern repetition and the probability of the new case to be a hit. The higher the value of *k*, the greater the relevance of a hit is weighted over a miss.

In the end, the final Case Relevant Indicator *(CRI)* is calculated by applying the Correction Coefficients (*CC*) of all the background cases to the initial case relevant indicator *(ICRI).*

In a particular embodiment, wherein *the sub-step of the method for calculating the Case Relevant Indicator (CRI) by applying a Correction Coefficient (CC) to the Initial Case Relevant Indicator (ICRI) further comprises the following sub-step:*

- *for each background case used for determining the CRI, obtaining a Correction Time $\alpha$ using a displaced sigmoid function:*

$$\alpha_j = \frac{1}{1 + e^{(t_j - \theta)\sigma}}$$

wherein index j indicates a specific background case, t is the time since the background case happened, $\theta$ is a predetermined parameter that indicates the displacement of the sigmoid function and $\sigma$ is a predetermined parameter that indicates the slope of the sigmoid function;

and wherein the calculation of the Amended Case Relevant Indicator (ACRI) vector is further based on a Correction Time Matrix, which is a diagonal matrix of correction times $\alpha_j$, and is calculated as:

$$M_{ACRI} = \begin{bmatrix} \alpha_1 & \cdots & 0 \\ \vdots & \ddots & \vdots \\ 0 & \cdots & \alpha_C \end{bmatrix} \begin{bmatrix} n_{11} & \cdots & n_{1T} \\ \vdots & \ddots & \vdots \\ n_{C1} & \cdots & n_{CT} \end{bmatrix} \begin{bmatrix} w_1 \\ \vdots \\ w_T \end{bmatrix} = [ACRI_1, \ldots, ACRI_C]$$

In this embodiment, in order to calculate the Case Relevant Indicator (CRI) by calculating and applying a Correction Coefficient (CC) to the Initial Case Relevant Indicator (ICRI), firstly a selection of the background cases is performed.

This selection takes into account the background cases that happened during a certain period of time predetermined, those that happened recently. Besides, the previous selection can also be refined with other selection criterion; for example, by selecting the alert cases of a certain industrial plant or the alert cases of a certain account and/or asset in the context of trade surveillance. Note that this selection criterion could be the same as any of the classifying criteria previously described.

Next, for each of the background cases selected, the method calculates a Correction Time $\alpha$ using a displaced sigmoid function. As "sigmoid function" will be understood a mathematical function with a characteristic "S"-shaped curve or sigmoid curve. The value of the Correction Time depends on the specific background case, the time occurred since the background case happened, for instance measured in number of days, and the parameters defining the displacement and the slope of the sigmoid function.

The sigmoid function gives more relevance to the alert cases happened recently and less relevance to the alert cases happened a long time ago.

The parameters that define the displacement and the slope of the sigmoid function are established at the beginning of the execution of the method, depending on the context of alert issuing. They should be established according to the interval of time according to which the alerts were classified; that is, if the classifying criterion was to merge alerts issued during a period of a day, the parameters defining the displacement and slope of the sigmoid function should be established to cover several days. In cases where the classifying criterion was to merge alerts issued during a period of one minute, the parameters defining the displacement and the slope of the sigmoid function should be established to cover a few hours. In this way, such parameters are established taken into account the time interval of the classifying criterion with a security margin.

Then, an Amended Case Relevant Indicator (ACRI) vector is calculated using such weights, the number of alerts generated for the behavior property of each background case and a matrix related to the Correction Times. This matrix is a diagonal matrix with the Correction Times calculated before for each background case.

In a particular embodiment, *the weights for the behavior properties of both alert and background cases are based on the following performance criteria:*

- *the frequencies at which the elements that issued the alerts take samples; or*
- *the measurement accuracies of the elements that issued the alerts; or*
- *the relevance that the measurements of the elements that issued the alerts have in relation to the event being reported; or*
- *a combination of any of the previous ones.*

The real performance of the elements that issued the alerts is taken into account to select a weight for each behavior property of each alert case and background case. This is the way in which the method considers relevant information of the elements that issue the alerts, being such information related to the knowledge an expert has about the particular element that issues the alert.

As it was previously mentioned, the type of relevant information will depend on the context of the alert issuing. For example, in the case of sensors, detectors or devices are involved in the alert issuing, the relevant information used is the knowledge an expert has about their type of technology, their calibration and the accuracy of their measurement, if any. In another example, when third party tools are involved in the alert issuing, the relevant information used is the knowledge an expert has about the reliability of the tool and the reliability of the third party.

In this way, the method defines different performance criteria to select the weights for the behavior properties in an objective manner. The most representative criteria are the following ones, being combinable among them, without prejudice that other criteria could exist.

*1) The frequencies at which the elements that issued the alerts take samples.*

It must be noted that sensors, detectors or devices that monitors an activity could be programmed to issue alerts periodically. In other contexts this is not possible and the frequency of issuing alerts will vary in time; for example, the frequency of alerts emitted in a certain territory related to a traffic accident will be greater during such accident than the periods of time immediately before and after the accident.

*2) The measurement accuracies of the elements that issued the alerts.*

All the physical elements that issue an alert have tolerances to errors. Depending on how much permissible these tolerances are, the accuracy of the measurement could vary. In this way, the weights of the behavior properties could consider which elements are the most reliable according to their tolerances.

In the same way, third party tools that issue alerts have different degrees of meticulousness. Thus, the weights of the behavior properties of the cases whose alerts belong to meticulous tools should be greater than the weights of the non-meticulous tools.

*3) The relevance that the measurements of the elements that issued the alerts have in relation to the event the alerts are reporting.*

With this criterion, the weights of the behavior properties of the cases whose alerts were issued by elements that are straightly related to the event being reported should be greater than the rest. For example, when a fire is detected, an alert issued by a smoke detector has a narrower relation with the fire than an alert issued by a humidity detector. The last can report a fall of the humidity but this fact could occur for many other reasons, as external factors not related to the fire itself.

When the alerts were issued by third parties, it should be considered if a third party has relation to the event being reported or has malicious intentions. For example, when alerts reporting an informatics bug are issued by third parties, the weights of the behavior properties must reflect if a specific alert was issued by unauthorized users.

*4) The calibration of the element that issues the alert.*

It must be noted that sensors, detectors or devices that monitors an activity could be programmed to issue alerts according to a previous calibration. In this way, there can be a calibration threshold from which the alert is issued so that, the higher the threshold, the more demanding or strict the element that issues the alert is. Accordingly, the weights should be greater as much strict is the threshold of the element.

The same criterion could be extrapolated for third parties, who could decide their own calibration and calibration threshold.

In a particular embodiment, *the categories of severity where the at least one alert case is classified are:*

- *low severity: for the alert cases that are automatically discarded;*
- *medium severity: for the alert cases that can be stocked as they must be analyzed but they are not priority;*
- *high severity: for the alert cases that must be analyzed with urgency.*

In this embodiment, it is described a preferred classification without prejudice that the number and type of categories could change.

In this preferred embodiment, there are three different categories for the monitored alert cases according to their severity.

1) Low severity: when a case is deemed to have a low severity or urgency, it should be considered that the alerts will not require the intervention of a professional or any other type of actuation. In such cases, the alert case could be discarded directly and automatically.

2) Medium severity: when a case is deemed to have a medium severity or urgency, the alert should be analyzed by the group of experts so that they can identify if the alerts should require the intervention of a professional or any other kind of actuation. Such cases are not priority so they can be stored temporally until being analyzed.

3) High severity: when a case is deemed to have a high severity or urgency, the alerts should be prioritized so that they must be analyzed by the group of experts as soon as possible. In general, such cases require the intervention of a professional or other types of actuation.

Advantageously, counting on a category to discard cases automatically saves much time and resources that, besides, can be used on other more relevant cases.

In a particular embodiment, *the three categories of severity are defined by four thresholds:*

- *two predetermined thresholds related to the odds each alert case to be a hit;*
- *two predetermined thresholds related to the Case Relevant Indicators (CRI).*

The different categories of severity are defined according to different predetermined criteria. Preferably, such criteria comprises predetermined thresholds of the odds obtained for the alert cases to be hits and predetermined thresholds for the Case Relevant Indicators calculated.

In a particular embodiment, *the method further comprises:*

- *a step of periodically reviewing the reasons why the alert cases were discarded; or*
- *a step of re-determining the thresholds that define the categories of severity; or*
- *a step of re-define at least one of the predetermined parameters of the method: $\theta$, $\sigma$, B, D and/or k; or*
- *a combination of any of the previous ones.*

It is a good practice to review the alert cases that were discarded in order to identify possible errors made during the classification. If any, the thresholds defining the categories of severity and/or the predefined parameters of the method could be reviewed.

The categories of severity should not be statics but they could be re-determined periodically according to the odds and Case Relevant Indicators calculated in subsequent executions of the method.

Finally, all the parameters that are predefined could also be updated periodically in order to refine the accuracy of the method.

In a second inventive aspect, the invention provides *a processing system comprising means configured to perform the steps of the method according to the fist inventive aspect.*

In a third inventive aspect, the invention provides *a computer program product comprising instructions which, when the program is executed by a computer, cause the computer to carry out the steps of the method according to the fist inventive aspect.*

In a forth inventive aspect, the invention provides *a computer-readable medium comprising instructions which, when executed by a computer, cause the computer to carry out the steps of the method according to the fist inventive aspect.*

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figures 1        This figure shows a schematic flowchart of the method of the invention.

Figures 2a-2h    These figures show an embodiment of the method of the invention.

## DETAILED DESCRIPTION OF THE INVENTION

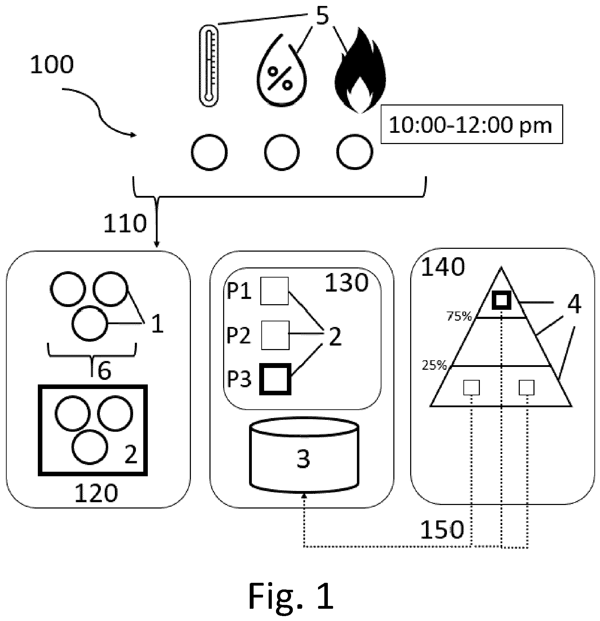

Figure 1 shows a schematic flowchart of the method (100) of the invention in the context of an industrial factory; in particular, an industrial factory where a fire took place at 10:30 pm.

The method (100) begins with the generation of a plurality of alerts (1) issued by a variety of elements (5). In this particular example, the elements (5) are two sensors that measure temperature and humidity and a smoke detector. For simplicity, in the scheme just three alerts (1) represented with circles are shown, each of them being issued by a different element (5) in the time slot 10:00 -12:00 pm. However, notice that other alerts (1) (not shown) were issued in other time slots.

When the alerts (1) have been generated, they are received (110) by a computer or a microcontroller where the method (100) is being executed. Then, the method (100) continues by classifying (120) the alerts (1) in at least one alert case (2) according to a predetermined classifying criterion (6). For simplicity, this step of the method (100) is shown in Figure 1 just for the three alerts (1) mentioned before. However, for the subsequent steps of the method (100) shown in Figure 1, other different alert cases (2) comprising the alerts issued in other time slots are depicted.

In this particular example, the classifying criterion (6) consist of joining alerts (1) issued by the elements (5) of a particular industrial factory during the last two hours. Considering that the moment when the alerts (1) were received (110) shown in Figure 1 is 12:00 pm, all the alerts (1) issued in the time slot 10:00 - 12:00 pm in the particular industrial factory will be classified (120) in the same alert case (2).

In other particular examples, the classifying criterion (6) could be limited to a specific plant of the industrial factory or even a specific area of a plant of the industrial factory. In other example, the classifying criterion (6) could be wider involving alerts (1) issued in the context of a specific type of industrial sector; for instance, a healthcare alert related to food industry or a drug alert related to pharma industry. In other example, the classifying criterion (6) is the join of alerts issued by the same third party, for example, alerts issued by a certain company whatever their professional activity is or alerts issued by a group of anonymous users reporting an accident to the medical services. In other example, the classifying criterion (6) consists on classifying (120) the alerts issued in a predetermined territory; for instance, alerts issued in a radius of five kilometers. In other example, the classifying criterion (6) is limited to the course of a specific event; for instance, the terrorism alerts issued during a concert. In other particular example, in the context of trade surveillance, the classifying criterion (6) could be more specific as alerts issued by a specific account, a specific asset or during the same trading session. All these types of classifying criteria (6) are combinable among them with the exception of combinations of such mutually exclusive. Once the alerts (1) have been classified (120) in an alert case (2), the method (100) continues calculating (130) the odds each alert case (2) corresponds to a hit. For this step of the method (100) shown in the example of Figure 1, three different alert cases (2) are depicted in the central section of Figure 1. Next to each alert case (2) a certain odd or probability (P1, P2 and P3) appears. Such probabilities (P1, P2 and P3) are calculated (130) according to the background cases (3) that were stored (150) in previous executions of the method (100). In this particular example, the background cases (3) are stored (150) in a database.

The probabilities (P1, P2, P3) indicates the odds an alert case (2) corresponds to a hit; that is, the probability that the alert case (2) corresponds to a real incident. The odds calculated (130) in this example are P1 = 5.1%, P2 = 0.13%, P3 = 0.86%. In particular, in Figure 1, the alert case (2) comprising the alerts (1) issued in the time slot 10:00 - 12:00 pm is the one with a thick contour with probability P3. The other two alert cases (2) shown in Figure 1 corresponds to alert cases (2) comprising alerts issued by the same sensors and detector but in other time slots: from 6:00 - 8:00 pm (with probability P1) and from 8:00 - 10:00 pm (with probability P2).

After calculating (130) the odds for each alert case (2), the method (100) continues classifying (140) each alert case (2) in a category of severity (4). In this particular example, there are three different categories of severity (4) defined by two thresholds of probabilities (1% and 5%):

  1) *Low severity:* for alert cases (2) with a probability lower than 1% of being a hit.
  2) *Medium severity:* for alert cases (2) with a probability greater or equal than 1% of being a hit and lower than 5% of being a hit.
  3) *High severity:* for alert cases (2) with a probability greater or equal than 5% of being a hit.

In the example of Figure 1, the alert cases (2) issued from 6:00 - 10:00 pm are classified (140) in the "low severity" category (4) and the alert case (2) issued from 10:00 -12:00 pm is classified (140) in the "high severity" category (4). Thus, the two first are automatically discarded as their probability of being reporting a fire event is really low. On contrary, the alert case (2) with high severity is analyzed with urgency as its probability is suggesting that a real incident is occurring; that is, the temperature and humidity measured and the concentration of smoke detected could correspond to the presence of a fire in the industrial plant with a great probability. In this situation, after analyzing the alert case (2), it is likely that the intervention of professional firemen is required or that the automatic triggering of a fire hydrant is produced.

In another particular example, the odd of being a hit of other different alert case (2) issued in the time slot 12:00 pm - 2:00 am was 3.5%. In such case, the alert case (2) is then classified (140) in the "medium severity" category (4) so that such alert case (2) is stored temporally to be analyzed with no urgency.

Finally, the method (100) continues storing (150) all the alerts (1) as part of the background cases (3) to be used in subsequent executions of the method (100). Together with the alerts (1), it is required to store (150) another relevant information as the result of the classification, the alert case (2) to which the alert (1) belongs, the element (5) that issued the alert (1) and the odds to be a hit calculated (130) for its alert case (2).

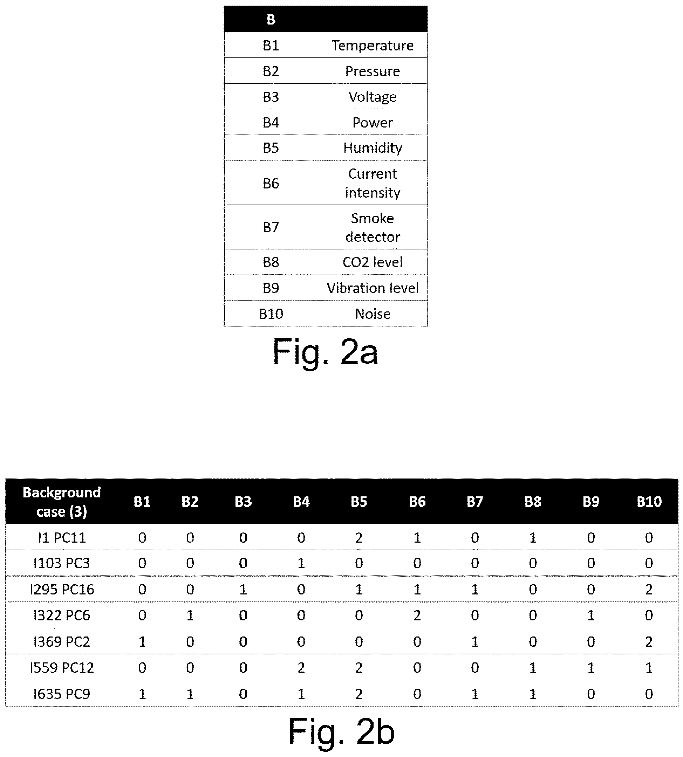

Figures 2a-2i show an embodiment of the method (100) of the invention representing a complete process for monitoring and classifying alerts (1) in the context of an industrial plant. In particular, the industrial plant has 20 productive chains (PC1... PC20) with the same design and structure operating in parallel. The industrial plant has been operating one year, that is, 220 working days. During this years, a number of 50000 alerts (1) were produced.

Each productive chain is being monitored by 10 different sensors or detectors. Each of these elements (5), which are configured to issue alerts (1), corresponds to a different behavior property (B1, B2 ... B10) as shown in Figure 2a. Each element (5) is calibrated so that they issue an alert (1) when a certain threshold is overcome. For example, a temperature sensor issues an alert (1) if the temperature measured exceeds 28 degrees.

There is also available a set of background cases (3) stored in a data base with all the alerts (1) issued throughout the year that were classified (140) as hits (real incidents) or miss (false positive). Together with this alerts (1), relevant information is also stored (150) in the database as part of the background cases (3) as the productive chain to which the alert (1) belongs, the time interval when the alert (1) was produced and the behavior property (B) of the alert (1).

The alert cases (2) and the background cases (3) in this particular example are/were generated according to two classifying criterion (6): alerts (1) issued for the same productive chain (PC) and alerts (1) issued during the same time interval (I). For the whole example, the notation of a case (2, 3) is: "$IN_{int} PCN_{pc}$", where $N_{int}$ is the number of time interval and $N_{pc}$ is the number of the productive chain. For instance, *"I457 PC13"* corresponds to the background case (3) with alerts (1) issued for the productive chain number 13 during the time interval 457.

Figure 2b shows an exemplifying table of different background cases (3) with the number of alerts (1) per behavior properties (B) that were issued. For instance, the background case (3) *"I559 PC12"* comprises 2 alerts (1) of the behavior property B4 (power), 2 alerts (1) of the behavior property B5 (humidity), 1 alert (1) of the behavior property B8 ($CO_2$ level), 1 alert (1) of the behavior property B9 (vibration level) and 1 alert (1 of the behavior property B10 (noise).

The productive chains operates during time intervals of 3 hours (I1, I2 ...) and, between intervals, a time gap of 20 minutes is produced for maintenance tasks. The total time intervals of 3 hours during the day are three. Then, taking into account that the number of working days is 220 and there are 3 time intervals per day, the total number of intervals of the background is 660.

*Configuration of the method (100): calculation of weights (W)*

Previously to executing the method (100) for the first time, a calculation of a weight (W) for each of the elements (5) configured to issue alerts (1) could be performed.

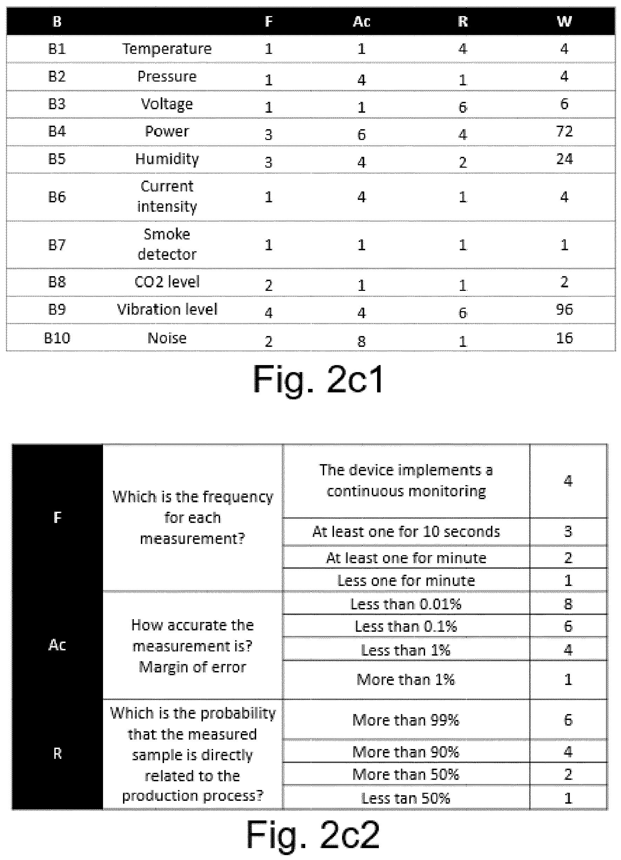

In Figure 2c1 it is shown a table for calculating the weight (W) of each of the sensors and detectors placed in the industrial plant. In the first column it is shown the behavior property (B) that correspond to each element (5); in the second column, there is a brief description of the property that the element (5) determines; in columns third to fifth, it is shown the values of the real performance of each element (5) and in the last column the final weight (W) for each element (5) is presented. Each weight (W) is calculated as the multiplication of the values of the real performance of each element (5).

Such weights (W) aims to evaluate the real performance of the elements (5) by means of a certain performance criteria; in this particular example, three different criteria are used:

- the frequencies (F) at which the elements (5) that issued the alerts (1) take samples;
- the measurement accuracies *(Ac)* of the elements (5) that issued the alerts (1); and
- the relevance (R) that the measurements of the elements (5) that issued the alerts (1) have in relation to event being reported.

In Figure 2c2 it is shown an example of a table for calculating the values of the real performance of each element (5) in order to calculate the weight (W) of each element (5). In the first column, it is indicated the performance criteria used (Frequencies identified with letter "F", Accuracy identified as "Ac" and Relevance identified as "R"). In the second column, there is a brief description of the meaning of each criteria. In the third column, it is shown the thresholds used to classify each element (5) and to determine the value of the real performance of each element (5). In the fourth column, it is shown the value associated to each element according to the real performance.

After the execution of the method (100), in case a change is produced in at least one of the elements (5) that issue alerts (1), this adjustment of weights (W) could be repeated for subsequent executions of the method (100).

*Configuration of the method (100): calculation of parameters*

For the execution of the method (100), the parameters $\theta$, $\sigma$, B, D and k should be predetermined.

*1) Initial Case Relevant Indicators (ICRI) of the background cases (3)*

The determination of the parameters requires information about the background cases (3), in particular their *ICRIs,* which are calculated taking into account the number of alerts (1) per behavior property (B) and the weights (W) of the behavior property (B) for each background case (3).

For instance, for the background cases (3) "I1 PC11" and "I559 PC12" shown in Figure 2b, the *ICRIs* are calculated as follows:

$$ICRI_{I1PC11} = nB5 * wB5 + nB6 * wB6 + nB8 * wB8$$
$$= 2 * 24 + 1 * 4 + 1 * 2 = 54$$

$$ICRI_{I559PC12} = nB4 * wB4 + nB5 * wB5 + nB8 * wB8 + nB9 * wB9$$
$$+ nB10 * wB10 = 2 * 72 + 2 * 24 + 1 * 2 + 1 * 96 + 1 * 16 = 306$$

After analyzing all the cases, the minimum *ICRI* calculated is equal to 1 and the maximum *ICRI* calculated is equal to 541.

*2) Time corrector adjustment*

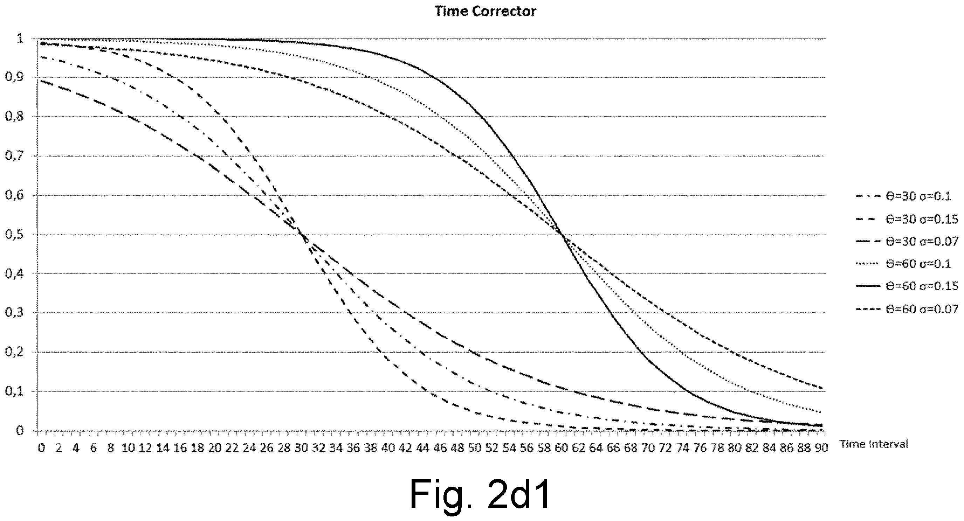

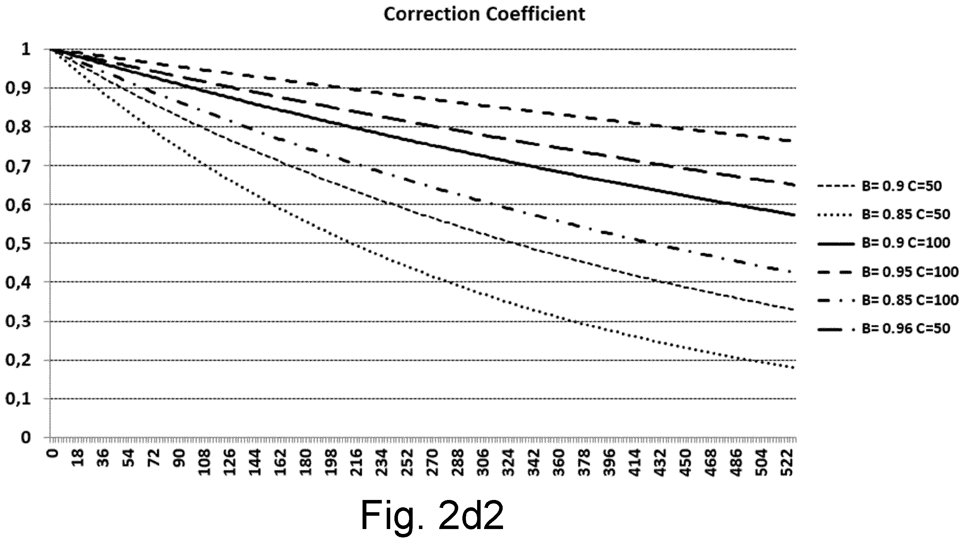

Figure 2d1 shows several displaced sigmoid functions for different combinations of parameters $\theta$ and $\sigma$. Depending on the time corrector adjustment needed in each alert context, a certain combination should be chosen. The set of sigmoid functions has been obtained empirically.

The sigmoid function gives more relevance to the alert cases happened recently and less relevance to the alert cases happened a long time ago. The sigmoid function is 1 for the alert cases that happened today and tends to zero for the background cases happened a long time ago.

Figure 2d1 shows in axis x the time interval, being 0 today and 90 the maximum time interval whose background cases are considered. That is, oldest background cases are located at the right side of the time axis.

In this particular example, during the execution of the method (100), a selection of background cases (3) is needed to calculate the Case Relevant Indicator (CRI) of each alert case (2). Such selection will consider just the background cases (3) of the last 60 time intervals. It must be noted that the parameters of the sigmoid functions are covering a period of 90 time intervals, as it is required to count on a security margin.

In this example, it is required to reduce the time corrector adjustment by half after 10 days (3 time intervals/day * 10 days = 30 time intervals). Taking into account that $\theta$ represents the number of intervals in which the background case ICRI is reduced by half and that $\sigma$ represents the abruptness of the curve drop, the parameters selected could be $\theta = 30$ and $\sigma = 0.1$

*3) Correction Coefficients adjustment*

According to the *ICRIs* calculated for the background cases (3) and according to this embodiment, a selection of the parameters *B, D* and *k* should be performed in order to define a Correction Coefficient CC. CC is determined as follows:

$$\overline{CC} = \prod_{j=1}^{n} B^{\left(\frac{ICRI_j * \alpha_j}{D}\right)} = B^{\frac{\sum_{j=1}^{n} ICRI_j * \alpha_j}{D}}$$

wherein *CC = k* if the alert case is a hit and *CC = $\overline{CC}$* otherwise.

Figure 2d2 shows several functions ($\overline{CC}$) for different combinations of parameters *B* and *D*. Depending on each alert context, a certain combination should be chosen. The set of functions has been obtained empirically.

In this particular example, as the *ICRIs* of the background cases (3) varies from 1 to 541 so the selected values are *B* = 0.9, *D* = 50 and *k* = 3.

*4) Thresholds for classifying (140) the alerts cases(2)*

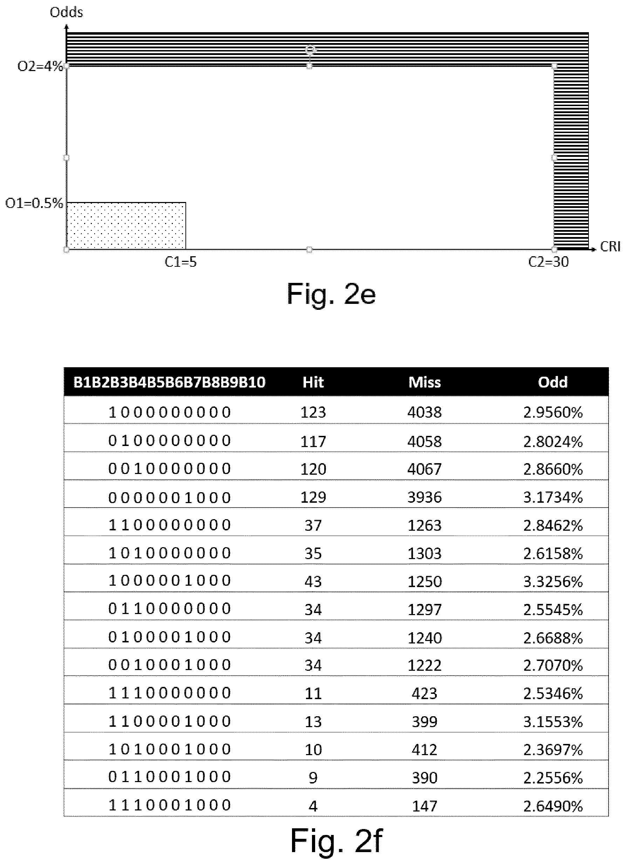

Figure 2e shows the three categories of severity (4) in which the alerts (1) can be classified (140). They are defined by four thresholds related to the odds to be a hit and the Case Relevant Indicators.

In this example:

- *High severity* cases (represented with horizontal lines) are those cases with probabilities to be a hit of more than 4% or a *CRI* greater than 30.
- *Low severity* cases (represented with dots) are those cases with probabilities to be a hit of less than 0.5% and a *CRI* lower than 5.

- *Medium severity cases* (represented with a thick contour) are the rest of the cases.

*Execution of the method (100): calculation (130) of the odds of each alert case (2) to be a hit*

The execution of the method (100) begins with the reception (110) of a plurality of alerts (1) issued by the plurality sensors and detectors (5). Such alerts (1) are classified (120) into different alert cases (2) and then, the method (100) calculates (130) the odds each alert case (2) corresponds to a hit using background cases (3).

Firstly, all the combination of behavior properties (*B*) of each background case (3) is obtained. Then, the Bayes theorem is applied to calculate (130) the odds of each combination of behavior property (*B*) to be a hit. In Figure 2f it is shown an example of the odds calculated (130) for different combinations of behavior properties (*B*) of background cases (3).

In the first column, it is shown a combination of ten behavior properties sorted as in table 2c (*B*) where the number "1" indicates that this particular behavior property (*B*) is present in the combination and "0" indicates that said behavior property is absent. The second and third columns show the number of hits and miss for this particular combination of behavior property (*B*) in the background cases and, in the last column, the probability of being a hit of the combination of behavior properties (*B*) is presented. For instance, the combination of behavior properties *B2 + B3 + B7* has a probability of 2.2556% of being a hit according to the background cases (3).

This list of probabilities is done for all the possible combination of behavior properties (*B*) of the background cases (3) and could be periodically updated. In this particular example, the updating is performed once a day.

Hereafter, for each alert case (2), the method (100) identifies all its possible combination of behavior properties (*B*) and assigns to each combination a probability to be a hit according to the list of odds calculated (130) before.

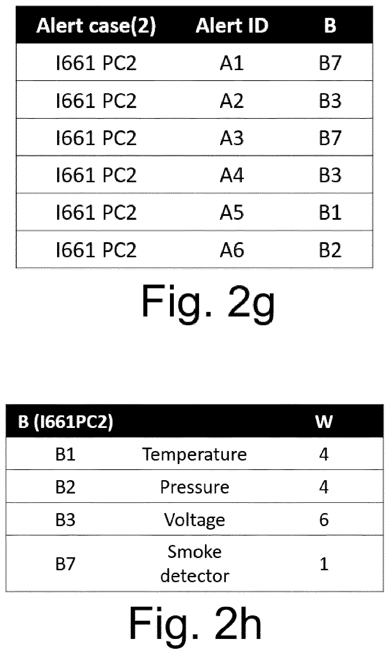

In Figure 2g it is shown an example of an alert case (2) that comprises the alerts (1) issued in the time interval 1661 for the productive chain PC2. In particular, the case is composed by 6 different alerts (1) of 4 different behavior properties (*B1*, *B2*, *B3* and *B7*). Then, the possible combination of behavior properties of this particular alert case (2) are: *B1, B2, B3, B7, B1 + B2, B1 + B3, B1 + B7, B2 + B3, B2 + B7, B3 + B7, B1 + B2 + B3, B1 + B2 + B7, B1 + B3 + B7, B2 + B3 + B7* and *B1 + B2 + B3 + B7*.

Then, the method (100) assigns a probability for each of the previously mentioned combinations of behavior properties (*B*) according to the list of odds of the background cases (3):

- $P(H/B1) = 2.9560\%$
- $P(H/B2) = 2.8024\%$
- $P(H/B3) = 2.8660\%$
- $P(H/B7) = 3.1734\%$
- $P(H/B1+B2) = 2.8462\%$
- $P(H/B1+B3) = 2.6158\%$
- $P(H/B1+B7) = 3.3256\%$
- $P(H/B2+B3) = 2.5545\%$
- $P(H/B2+B7) = 2.6688\%$
- $P(H/B3+B7) = 2.7070\%$
- $P(H/B1+B2+B3) = 2.5346\%$
- $P(H/B1+B2+B7) = 3.1553\%$
- $P(H/B1+B3+B7) = 2.3697\%$
- $P(H/B2+B3+B7) = 2.2556\%$
- $P(H/B1+B2+B3+B7) = 2.6490\%$

Finally, the method (100) calculates (130) the probability for the alert case (2) to be a hit as the maximum of the probabilities of being a hit of all its available combinations of behavior properties (*B*):
$$P(H_{I661PC2}) = 3.3256\%$$
The classification (140) in a particular category of severity (4) of each alert case (2) takes into account these probabilities.

*Execution of the method (100): calculation of Case Relevant Indicator (CRI)*

The method (100) of the invention, additionally, comprises a step of calculating a further metric, the Case Relevant Indicator *(CRI),* for each alert case (2) taking into account the real performance of the elements (5) that issued the alerts (1). Such *CRI,* together with the probability of each alert case (2) to be a hit, is later used during the classification (140) of the alert cases (2).

The use of this metric, advantageously, increments the accuracy of the alert cases (2) classification (140) so that the prioritization of alerts (1) is more precise.

The *CRI* estimation requires the weights (*W*) for the elements (5) that issue the alerts (1) estimated previously to the execution of the method (100). Thus, a selection of such weights (*W*) is needed according to the specific behavior properties (*B*) that are present in each alert case (2). In this particular example, for the alert case (2) I661PC2, the weights (*W*) selected are the ones shown in Figure 2h.

Next, an Initial Case Relevant Indicator (*ICRI*) is calculated for each alert case (2). This indicator considers the weights (*W*) previously mentioned and the number of alerts (1) per behavior property (*B*) of each particular alert case (2).

According to Figure 2g, one alert was generated for the behavior property *B*1; two alerts (1) were generated for the behavior property *B*3 and three alerts (1) were generated for the behavior property *B*7. The weights (*W*) of each behavior property (*B*) can be found in Figure 2h. Then, the *ICRI* for the alert case (2) "I661 PC2" is calculated as:

$$ICRI_{I661PC2} = nB1 * wB1 + nB2 * wB2 + nB3 * wB3 + nB7 * wB7$$
$$= 1 * 4 + 1 * 4 + 2 * 6 + 2 * 1 = 22$$

Most of combination of behavior properties (*B*) happen with the same pattern over and over again so, in order to prevent the method (100) to prioritize the same kind of alerts (1) every time, the *ICRI* should decrease if other similar patterns have been analyzed and discarded recently. To achieve that, the method (100) of the invention calculates and applies a Corrector Coefficient (*CC*) to the *ICRI* depending on similar behavior properties (*B*) analyzed recently and its relevance.

Firstly, the method (100) selects the background cases (3) of the same productive chain as the alert case (2) that were analyzed in the last 60 time intervals, as it was previously mentioned; that is, a selection of the background cases (3) whose time interval is among the time interval 601 and the time interval 660 (with the productive chain PC2).

Then, a Correction Time (α) is calculated for each background case (3) selected according to the parameters θ and σ predetermined when configuring the method (100).

Next, an Amended Case Relevant Indicator *(ACRI)* vector is calculated using the Correction Times ($\alpha_j$), the number of alerts (1) per behavior property (*B*) and the weights (*W*) of the behavior properties (*B*) of each background case (3) selected.

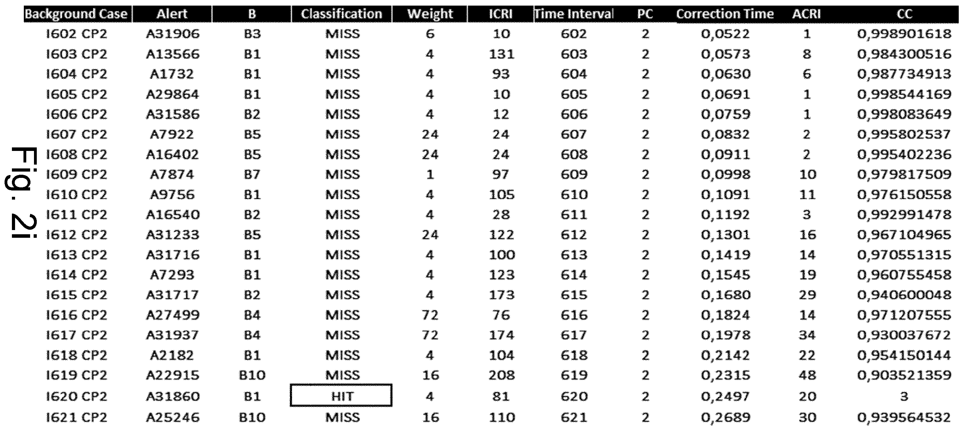

Hereafter, a Correction Coefficient (*CC*) is calculated for each background case (3) selected according to the *ACRI* vector and the parameters *B, D* and *k* predetermined when configuring the method (100). Besides, the method (100) takes into account if a specific background case (3) was a Hit or a Miss. Figure 2i shows an exemplifying table with the estimation of the CC for some of the background cases (3) selected.

Finally, the Case Relevant Indicator *(CRI)* is obtained for each alert case (2) by applying the Correction Coefficients to the *ICRI* initially calculated as *CRI = ICRI * CC* for each alert case (2). For the case being analyzed in this example ("I661 PC2")), the *CRI* is calculated multiplying its *ICRI* by all the *CCs* of the selected background cases (3) (being the value 0.0403) as follows:

$$CRI_{I661PC2} = ICRI * CC = 22 * 0.0403 = 0.88$$

*Execution of the method (100): classification (140) of alerts cases (2)*

To classify (140) the alert case (2) "I661 PC2" both the odds to be a hit (3.3256%) and the *CRI* (0.88) should be considered.

This alert case (2) is not a high *severity* case since its odds is lower than the threshold of 4% and its *CRI* value is lower than the threshold of 30. It is not a *low severity* case either because, although the *CRI* value is lower than the threshold of 5, the odds exceed the threshold of 0.5%.

Then, the alert case (2) is a *medium severity* case, what implies that the case is not going to be discarded but stocked temporally so that it can be later analyzed with no urgency.

*Execution of the method (100): storing (150) the alerts (1) as part of the background*

Finally, the alerts (1) of the alert case (2) "I661 PC2" start to form part of the background together with its relevant information: the alert case (2) to which they belong and its *ICRI,* the result of the classification (*MISS*), the behavior property (*B*) involved in each alert (1) and its weight (*W*); by storing such information in the background data base.

**Claims**

1. A computer implemented-method (100) for monitoring large amounts of alerts (1) to classify them according to their severity, the method (100) comprising the following steps:

   a) providing a database of background cases (3);
   b) receiving (110) a plurality of alerts (1) issued by at least one element (5);
   c) classifying (120) the plurality of alerts (1) in at least one alert case (2) according to a predetermined classifying criterion (6);
   d) calculating (130) the odds each alert case (2) corresponds to a hit using background cases (3);
   e) classifying (140) the at least one alert case (2) in a category of severity (4), wherein the number of categories of severity (4) is at least two, according to the odds previously calculated (130);
   f) storing (150) each alert (1) with the result of the classification and other relevant information as part of the background cases (3) to be used in subsequent executions of the method (100);
   g) providing a set of alert cases (3) classified in at least one category of severity (4).

2. The computer implemented-method (100) according to claim 1, wherein the step of the method (100) of calculating (130) the odds each alert case (2) corresponds to a hit comprises the following sub-steps:

   i. for each background case (3), obtaining its $Z_B$ available combinations of behavior properties ($B$), $CB_i$, wherein:

   - a behavior property ($B$) is a kind of alert (1), a kind of measurement of an alert (1) or a kind of element (5) that issued an alert (1); and
   - $Z_B$ is calculated as:

$$Z_B = \sum_{M_B=1}^{M_B=N_B} \binom{N_B}{M_B} = \sum_{M_B=1}^{M_B=N_B} \frac{N_B!}{M_B!\,(N_B - M_B)!}$$

   being $N_B$ the total number of behavior properties ($B$) of the background case (3) and $M_B$ is the number of behavior properties ($B$) of each available combination of behavior properties ($B$) of the background case (3), with $M_B$ = 1 ... $N_B$;

   ii. applying the Bayes theorem to calculate the odds of each combination $CB_i$ of behavior properties ($B$) to be a hit:

$$P(H|CB_i) = \frac{P(CB_i|H) * P(H)}{P(CB_i)}$$

   wherein $P$ indicates probability, $CB_i$ is each of the combinations of behavior properties ($B$) of a background case (3) with $i$ = 1 ... $Z_B$, $H$ indicates hit and $P(CB_i|H)$ and $P(H|CB_i)$ are conditional probabilities;
   iii. for each alert case (2), obtaining its $Z$ available combinations of behavior properties ($B$), wherein $Z$ is calculated as:

$$Z = \sum_{M=1}^{M=N} \binom{N}{M} = \sum_{M=1}^{M=N} \frac{N!}{M!\,(N - M)!}$$

   being $N$ the total number of behavior properties ($B$) of an alert case (2) and $M$ is the number of behavior properties ($B$) of each available combination of behavior properties ($B$) of the alert case (2), wherein $M$ = 1 ... $N$;
   iv. assigning a probability of being a hit to each combination $Ci$ of behavior properties ($B$) of each alert case (2) according to the odds of being a hit of each combination $CB_i$ of behavior properties of the background cases (3):

$$P(H|C_i) = P(H|CB_i)$$

v. calculating the probability for each alert case (2) to be a hit as the maximum of the probabilities of being a hit of all its available combinations of behavior properties (*B*):

$$P(H_{case}) = \max\{P(H|C_1), \ldots, P(H|C_Z)\}$$

**3.** The computer-implemented method (100) according to claim 2, wherein the sub-steps for calculating the probabilities of each combination of behavior properties (*B*) of the background cases (3) to be a hit is performed periodically, being the period a predefined value of time.

**4.** The computer-implemented method (100) according to any of the previous claims, wherein the classifying criterion (6) is one of the following:

- alerts (1) that comes from a specific type of industrial sector; or
- alerts (1) issued by a specific industrial factory; or
- alerts (1) issued by a specific industrial plant being monitored; or
- alerts (1) issued by a specific industrial plant area being monitored; or
- alerts (1) issued by the same third party; or
- alerts (1) issued in a predefined period of time; or
- alerts (1) issued in a predefined territory; or
- alerts (1) issued during the course of a specific event, as a football match or the duration of a tornado; or
- alerts (1) issued by a specific account in stock markets; or
- alerts (1) issued by a specific asset in stock markets; or
- alerts (1) issued during the same trading session in stock markets; or
- a combination of at least two of the previous ones.

**5.** The computer-implemented method (100) according to any of the previous claims, wherein

the method (100) further comprises a step of calculating a metric, the Case Relevant Indicator *(CRI),* for each alert case (2) taking into account the real performance of the elements (5) that issued the alerts (1); and the step of classifying (140) the at least one alert case (2) in a category of severity (4) is additionally based in the Case Relevant Indicators *(CRI).*

**6.** The computer-implemented method (100) according to claim 5, wherein the method (100) further comprises a previous step of calculating a weight (*W*) for each element (5) configured to issue an alert (1) taking into account the real performance of such element (5).

**7.** The computer-implemented method (100) according to claim 6, wherein the calculation of the Case Relevant Indicator *(CRI)* is performed according to the following sub-steps:

- selecting a weight (*W*) for each behavior property (*B*) of each alert case (2),
- calculating an Initial Case Relevant Indicator (*ICRI*) for each alert case (2):
  ∘

$$ICRI = [n_1, \ldots, n_i, \ldots, n_T]\begin{bmatrix} w_1 \\ \vdots \\ w_i \\ \vdots \\ w_T \end{bmatrix} = \sum_{j=1}^{T} n_j \cdot w_j$$

- wherein $n_i$ is the number of alerts (1) generated for the *i - th* behavior property (*B*); $w_i$ is the weight (*W*) of the *i - th* behavior property (*B*) and *T* the total number of behavior properties (*B*) of the alert case (2),
- calculating the Case Relevant Indicator (*CRI*) by applying a Correction Coefficient (*CC*) to the Initial Case Relevant Indicator (*ICRI*), wherein the Correction Coefficient (*CC*) decreases the Case Relevant Indicator (*CRI*) if the behavior properties (*B*) of the alert case (2) are similar to behavior properties (*B*) of other alert case (2) analyzed and discarded in previous executions of the method (100).

**8.** The computer-implemented method (100) according to claim 7, wherein the background cases (3) used for determining the CRI are those happened during a predetermined period of time P.

**9.** The computer-implemented method (100) according to claim 7 or 8, wherein the Correction Coefficient (CC) is a decreasing function.

**9.** The computer-implemented method (100) according to any of claims 7 to 9, wherein the sub-step of the method (100) for calculating the Case Relevant Indicator (*CRI*) by applying a Correction Coefficient (*CC*) to the Initial Case Relevant Indicator (*ICRI*) is performed according to the following sub-steps:

- selecting a weight (*W*) for each behavior property (*B*) of each background case (3),
- calculating an Amended Case Relevant Indicator (*ACRI*) vector based on the weights (*W*) selected for each behavior property (*B*) of each background case (3):

$$M_{ACRI} = \begin{bmatrix} n_{11} & \cdots & n_{1T} \\ \vdots & \ddots & \vdots \\ n_{C1} & \cdots & n_{CT} \end{bmatrix} \begin{bmatrix} w_1 \\ \vdots \\ w_T \end{bmatrix} = [ACRI_1, \dots, ACRI_C]$$

wherein $n_{ji}$ is the number of alerts (1) generated for the $i$ - $th$ behavior property (*B*) for a $j$ - $th$ background case (3), $w_i$ is the weight (*W*) of the $i$ - $th$ behavior property (*B*), *T* is the total number of behavior properties (*B*) and *C* is the total number of background cases (3),
- calculating the Correction Coefficient (*CC_j*) for each $j$ - $th$ background case (3) based on the Amended Case Relevant Indicator *(ACRI)* vector:

  ◦ if the background case (3) is a hit

$$CC_j = k$$

  ◦ otherwise

$$CC_j = B^{\left(\frac{ACRI_j}{D}\right)};$$

wherein *B* and *D* are predetermined values that adjust the level of correction of interest and *k* is a predetermined multiplication coefficient;

- calculating, for each alert case (2), the Case Relevant Indicator (*CRI*) by applying the Correction Coefficients (*CC*) to the initial case relevant indicator (*ICRI*) as follows:

$$CRI = ICRI * \prod_{j=1}^{C} CC_j$$

wherein $CC_j$ is the correction coefficient of the $j$ - $th$ background case (3) and *C* is the total number of background cases (3) selected.

**10.** The computer-implemented method (100) according to claim 9 and any of claims 1 to 8, wherein the sub-step of the method (100) for calculating the Case Relevant Indicator (*CRI*) by applying a Correction Coefficient (*CC*) to the Initial Case Relevant Indicator (*ICRI*) further comprises the following sub-step:

- for each background case (3) used for determining the CRI, obtaining a Correction Time $\alpha$ using a displaced sigmoid function:

$$\alpha_j = \frac{1}{1 + e^{(t_j - \theta)\sigma}}$$

wherein index $j$ indicates a specific background case (3), t is the time since the background case (3) happened, $\theta$ is a predetermined parameter that indicates the displacement of the sigmoid function and $\sigma$ is a predetermined parameter that indicates the slope of the sigmoid function; and wherein the calculation of the Amended Case Relevant Indicator (*ACRI*) vector is further based on a Correction Time Matrix, which is a diagonal matrix of correction times $\alpha_j$, and is calculated as:

$$M_{ACRI} = \begin{bmatrix} \alpha_1 & \cdots & 0 \\ \vdots & \ddots & \vdots \\ 0 & \cdots & \alpha_C \end{bmatrix} \begin{bmatrix} n_{11} & \cdots & n_{1T} \\ \vdots & \ddots & \vdots \\ n_{C1} & \cdots & n_{CT} \end{bmatrix} \begin{bmatrix} w_1 \\ \vdots \\ w_T \end{bmatrix} = [ACRI_1, \dots, ACRI_C]$$

**11.** The computer-implemented method (100) according to the claims 6 or 7 and any of previous claims, wherein the weights (*W*) for the behavior properties (*B*) of both alert and background cases (2, 3) are based on the following performance criteria:

- the frequencies (*F*) at which the elements (5) that issued the alerts (1) take samples; or
- the measurement accuracies (*A*) of the elements (5) that issued the alerts (1); or
- the relevance (*R*) that the measurements of the elements (5) that issued the alerts (1) have in relation to event being reported; or
- the calibration of the elements (5) that issued the alerts (1); or
- a combination of any of the previous ones.

**12.** The computer-implemented method (100) according to any of the previous claims, wherein the categories of severity (4) where the at least one alert case (2) is classified (140) are:

- low severity: for the alert cases (2) that are automatically discarded;
- medium severity: for the alert cases (2) that can be stocked as they must be analyzed but they are not priority;
- high severity: for the alert cases (2) that must be analyzed with urgency.

**13.** The computer-implemented method (100) according to claim 12, wherein the three categories of severity are defined by four thresholds:

- two predetermined thresholds related to the odds each alert case (2) to be a hit;
- two predetermined thresholds related to the Case Relevant Indicators (*CRI*).

**14.** The computer-implemented method (100) according to claim 13, wherein the method (100) further comprises:

- a step of periodically reviewing the reasons why the alert cases (2) were discarded; or
- a step of re-determining the thresholds that define the categories of severity; or
- a step of re-define at least one of the predetermined parameters of the method (100): $\theta$, $\sigma$, *B*, *D* and/or *k*; or
- a combination of any of the previous ones.

**15.** A processing system comprising means configured to perform the steps of the method (100) according to any of the previous claims.

**16.** A computer program product comprising instructions which, when the program is executed by a computer, cause the computer to carry out the steps of the method (100) according to any of the claims 1 to 14.

**17.** A computer-readable medium comprising instructions which, when the program is executed by a computer, cause the computer to carry out the steps of the method (100) according to any of the claims 1 to 14.

Fig. 1

| B | |
|---|---|
| B1 | Temperature |
| B2 | Pressure |
| B3 | Voltage |
| B4 | Power |
| B5 | Humidity |
| B6 | Current intensity |
| B7 | Smoke detector |
| B8 | CO2 level |
| B9 | Vibration level |
| B10 | Noise |

# Fig. 2a

| Background case (3) | B1 | B2 | B3 | B4 | B5 | B6 | B7 | B8 | B9 | B10 |
|---|---|---|---|---|---|---|---|---|---|---|
| I1 PC11 | 0 | 0 | 0 | 0 | 2 | 1 | 0 | 1 | 0 | 0 |
| I103 PC3 | 0 | 0 | 0 | 1 | 0 | 0 | 0 | 0 | 0 | 0 |
| I295 PC16 | 0 | 0 | 1 | 0 | 1 | 1 | 1 | 0 | 0 | 2 |
| I322 PC6 | 0 | 1 | 0 | 0 | 0 | 2 | 0 | 0 | 1 | 0 |
| I369 PC2 | 1 | 0 | 0 | 0 | 0 | 0 | 1 | 0 | 0 | 2 |
| I559 PC12 | 0 | 0 | 0 | 2 | 2 | 0 | 0 | 1 | 1 | 1 |
| I635 PC9 | 1 | 1 | 0 | 1 | 2 | 0 | 1 | 1 | 0 | 0 |

# Fig. 2b

| B | | F | Ac | R | W |
|---|---|---|---|---|---|
| B1 | Temperature | 1 | 1 | 4 | 4 |
| B2 | Pressure | 1 | 4 | 1 | 4 |
| B3 | Voltage | 1 | 1 | 6 | 6 |
| B4 | Power | 3 | 6 | 4 | 72 |
| B5 | Humidity | 3 | 4 | 2 | 24 |
| B6 | Current intensity | 1 | 4 | 1 | 4 |
| B7 | Smoke detector | 1 | 1 | 1 | 1 |
| B8 | CO2 level | 2 | 1 | 1 | 2 |
| B9 | Vibration level | 4 | 4 | 6 | 96 |
| B10 | Noise | 2 | 8 | 1 | 16 |

# Fig. 2c1

| | | | |
|---|---|---|---|
| F | Which is the frequency for each measurement? | The device implements a continuous monitoring | 4 |
| | | At least one for 10 seconds | 3 |
| | | At least one for minute | 2 |
| | | Less one for minute | 1 |
| Ac | How accurate the measurement is? Margin of error | Less than 0.01% | 8 |
| | | Less than 0.1% | 6 |
| | | Less than 1% | 4 |
| | | More than 1% | 1 |
| R | Which is the probability that the measured sample is directly related to the production process? | More than 99% | 6 |
| | | More than 90% | 4 |
| | | More than 50% | 2 |
| | | Less tan 50% | 1 |

# Fig. 2c2

Time Corrector

Fig. 2d1

Legend:
- θ=30 σ=0.1
- θ=30 σ=0.15
- θ=30 σ=0.07
- θ=60 σ=0.1
- θ=60 σ=0.15
- θ=60 σ=0.07

Time interval

Fig. 2d2

Fig. 2e

| B1B2B3B4B5B6B7B8B9B10 | Hit | Miss | Odd |
|---|---|---|---|
| 1 0 0 0 0 0 0 0 0 0 | 123 | 4038 | 2.9560% |
| 0 1 0 0 0 0 0 0 0 0 | 117 | 4058 | 2.8024% |
| 0 0 1 0 0 0 0 0 0 0 | 120 | 4067 | 2.8660% |
| 0 0 0 0 0 0 1 0 0 0 | 129 | 3936 | 3.1734% |
| 1 1 0 0 0 0 0 0 0 0 | 37 | 1263 | 2.8462% |
| 1 0 1 0 0 0 0 0 0 0 | 35 | 1303 | 2.6158% |
| 1 0 0 0 0 0 1 0 0 0 | 43 | 1250 | 3.3256% |
| 0 1 1 0 0 0 0 0 0 0 | 34 | 1297 | 2.5545% |
| 0 1 0 0 0 0 1 0 0 0 | 34 | 1240 | 2.6688% |
| 0 0 1 0 0 0 1 0 0 0 | 34 | 1222 | 2.7070% |
| 1 1 1 0 0 0 0 0 0 0 | 11 | 423 | 2.5346% |
| 1 1 0 0 0 0 1 0 0 0 | 13 | 399 | 3.1553% |
| 1 0 1 0 0 0 1 0 0 0 | 10 | 412 | 2.3697% |
| 0 1 1 0 0 0 1 0 0 0 | 9 | 390 | 2.2556% |
| 1 1 1 0 0 0 1 0 0 0 | 4 | 147 | 2.6490% |

Fig. 2f

| Alert case(2) | Alert ID | B |
|---|---|---|
| I661 PC2 | A1 | B7 |
| I661 PC2 | A2 | B3 |
| I661 PC2 | A3 | B7 |
| I661 PC2 | A4 | B3 |
| I661 PC2 | A5 | B1 |
| I661 PC2 | A6 | B2 |

# Fig. 2g

| B (I661PC2) | | W |
|---|---|---|
| B1 | Temperature | 4 |
| B2 | Pressure | 4 |
| B3 | Voltage | 6 |
| B7 | Smoke detector | 1 |

# Fig. 2h

**Fig. 2i**

| Background Case | Alert | B | Classification | Weight | ICRI | Time Interval | PC | Correction Time | ACRI | CC |
|---|---|---|---|---|---|---|---|---|---|---|
| I602 CP2 | A31906 | B3 | MISS | 6 | 10 | 602 | 2 | 0,0522 | 1 | 0,998901618 |
| I603 CP2 | A13566 | B1 | MISS | 4 | 131 | 603 | 2 | 0,0573 | 8 | 0,984300516 |
| I604 CP2 | A1732 | B1 | MISS | 4 | 93 | 604 | 2 | 0,0630 | 6 | 0,987734913 |
| I605 CP2 | A29864 | B1 | MISS | 4 | 10 | 605 | 2 | 0,0691 | 1 | 0,998544169 |
| I606 CP2 | A31586 | B2 | MISS | 4 | 12 | 606 | 2 | 0,0759 | 1 | 0,998083649 |
| I607 CP2 | A7922 | B5 | MISS | 24 | 24 | 607 | 2 | 0,0832 | 2 | 0,995802537 |
| I608 CP2 | A16402 | B5 | MISS | 24 | 24 | 608 | 2 | 0,0911 | 2 | 0,995402236 |
| I609 CP2 | A7874 | B7 | MISS | 1 | 97 | 609 | 2 | 0,0998 | 10 | 0,979817509 |
| I610 CP2 | A9756 | B1 | MISS | 4 | 105 | 610 | 2 | 0,1091 | 11 | 0,976150558 |
| I611 CP2 | A16540 | B2 | MISS | 4 | 28 | 611 | 2 | 0,1192 | 3 | 0,992991478 |
| I612 CP2 | A31233 | B5 | MISS | 24 | 122 | 612 | 2 | 0,1301 | 16 | 0,967104965 |
| I613 CP2 | A31716 | B1 | MISS | 4 | 100 | 613 | 2 | 0,1419 | 14 | 0,970551315 |
| I614 CP2 | A7293 | B1 | MISS | 4 | 123 | 614 | 2 | 0,1545 | 19 | 0,960755458 |
| I615 CP2 | A31717 | B2 | MISS | 4 | 173 | 615 | 2 | 0,1680 | 29 | 0,940600048 |
| I616 CP2 | A27499 | B4 | MISS | 72 | 76 | 616 | 2 | 0,1824 | 14 | 0,971207555 |
| I617 CP2 | A31937 | B4 | MISS | 72 | 174 | 617 | 2 | 0,1978 | 34 | 0,930037672 |
| I618 CP2 | A2182 | B1 | MISS | 4 | 104 | 618 | 2 | 0,2142 | 22 | 0,954150144 |
| I619 CP2 | A22915 | B10 | MISS | 16 | 208 | 619 | 2 | 0,2315 | 48 | 0,903521359 |
| I620 CP2 | A31860 | B1 | HIT | 4 | 81 | 620 | 2 | 0,2497 | 20 | 3 |
| I621 CP2 | A25246 | B10 | MISS | 16 | 110 | 621 | 2 | 0,2689 | 30 | 0,939564532 |

Europäisches
Patentamt

European
Patent Office

Office européen
des brevets

# EUROPEAN SEARCH REPORT

Application Number

EP 20 38 2090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/004957 A1 (CHAMARAJU MANOHAR MYSORE [IN] ET AL) 2 January 2020 (2020-01-02) * paragraph [0010] - paragraph [0065] * * figures 1-8 * | 1-18 | INV. G06N7/00 |
| A | US 2019/012566 A1 (KUMAGAI ATSUTOSHI [JP] ET AL) 10 January 2019 (2019-01-10) * paragraph [0039] - paragraph [0082] * * paragraph [0109] - paragraph [0123] * | 1-18 | |
| A | US 2014/058539 A1 (PARK YOUNGCHOON [US]) 27 February 2014 (2014-02-27) * paragraph [0058] - paragraph [0064] * * paragraph [0074] - paragraph [0075] * * figures 2a,2b * | 1-18 | |
| A | EP 3 451 300 A1 (DEERE & CO [US]) 6 March 2019 (2019-03-06) * paragraph [0028] - paragraph [0072] * * figures 9-10 * | 5-12 | |
| A | US 2014/201126 A1 (ZADEH LOTFI A [US] ET AL) 17 July 2014 (2014-07-17) * paragraph [3032] - paragraph [3088] * | 5-12 | TECHNICAL FIELDS SEARCHED (IPC) G06N |

The present search report has been drawn up for all claims

| Place of search | Date of completion of the search | Examiner |
|---|---|---|
| The Hague | 20 August 2020 | Baldan, Marco |

EPO FORM 1503 03.82 (P04C01)

EP 3 862 933 A1

## ANNEX TO THE EUROPEAN SEARCH REPORT
## ON EUROPEAN PATENT APPLICATION NO.

EP 20 38 2090

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2020

| Patent document cited in search report | | | Publication date | Patent family member(s) | | | Publication date |
|---|---|---|---|---|---|---|---|
| US | 2020004957 | A1 | 02-01-2020 | NONE | | | |
| US | 2019012566 | A1 | 10-01-2019 | JP | 6450032 | B2 | 09-01-2019 |
| | | | | JP | WO2017130835 | A1 | 21-06-2018 |
| | | | | US | 2019012566 | A1 | 10-01-2019 |
| | | | | WO | 2017130835 | A1 | 03-08-2017 |
| US | 2014058539 | A1 | 27-02-2014 | US | 2014058539 | A1 | 27-02-2014 |
| | | | | US | 2016320758 | A1 | 03-11-2016 |
| | | | | US | 2020125043 | A1 | 23-04-2020 |
| EP | 3451300 | A1 | 06-03-2019 | EP | 3451300 | A1 | 06-03-2019 |
| | | | | US | 10217066 | B1 | 26-02-2019 |
| | | | | US | 2019188613 | A1 | 20-06-2019 |
| US | 2014201126 | A1 | 17-07-2014 | NONE | | | |

EPO FORM P0459

For more details about this annex : see Official Journal of the European Patent Office, No. 12/82